# EUROPÄISCHE PATENTSCHRIFT

(11) **EP 1 339 228 B1**
(45) Veröffentlichungstag und Bekanntmachung des Hinweises auf die Patenterteilung: **05.07.2006**
(21) Anmeldenummer: 03001918.6
(22) Anmeldetag: 30.01.2003
(51) Int. Cl.: H04N 5/33, B60R 1/00, G02B 27/01

(54) **Verfahren und Vorrichtung zur Sichtbarmachung eines Ausschnitts der Umgebung eines Fahrzeugs sowie eine Kalibriereinheit zur Kalibrierung der Vorrichtung**
Method and device for visualization of a detail of a vehicle's environment and calibration unit for calibrating the device
Méthode et dispositif pour la visualisation d'une portion de l'environnement d'un véhicule et unité d'étalonnage pour calibrer le dispositif

(30) Priorität: 20.02.2002 DE 10207039
(43) Veröffentlichungstag der Anmeldung: 27.08.2003
(73) Patentinhaber: Bayerische Motoren Werke Aktiengesellschaft, 80809 München (DE)
(72) Erfinder: Hahn, Wolfgang, 85247 Schwabhausen (DE); Weidner, Thomas, 04207 Leipzig (DE)

(56) Entgegenhaltungen:
- EP-A- 0 691 559
- WO-A-01/21438
- US-A- 223 898
- US-A- 4 086 616
- US-A- 5 001 558
- US-A- 6 094 304
- US-A- 6 163 309
- US-B1- 6 281 931
- PATENT ABSTRACTS OF JAPAN vol. 2000, no. 02, 29. Februar 2000 (2000-02-29) & JP 11 313250 A (YAMAGATA YASUFUMI), 9. November 1999 (1999-11-09)
- W. FÖRSTER ET AL (EDITORS): "Mustererkennung 1999, 21. DAGM Symposium, Bonn, 15.-17.9.1999, Proceedings" [Online] 1999 , SPRINGER XP002235014 ISBN: 3-540-66381-9 Gefunden im Internet: <URL: http://pandora.inf.uni-jena.de/cbb/radial. pdf> [gefunden am 2003-03-14] "Bestimmung und Korrektur radialsymmetrischer Verzeichnungen in digitalen Einzelbildern" (BRÄUER-BURCHARDT, VOSS, SCHUBERT) * Seite 389 - Seite 396 *

## Beschreibung

Die Erfindung betrifft ein Verfahren und eine Vorrichtung zur Sichtbarmachung eines Ausschnitts der Umgebung eines Fahrzeugs nach dem Oberbegriff des betreffenden unabhängigen Patentanspruchs.

Aus der DE 695 06 174 T2 ist ein Nachsichtsystem für ein Fahrzeug bekannt. Das System weist eine Infrarot-Kamera auf, die ein Infrarot-Abbild erzeugt, das die von Personen und Gegenständen ausgehende Wärmestrahlung eines Ausschnitts der Umgebung des Fahrzeugs zeigt. Das Infrarot-Abbild wird über ein Head-up-Display auf den unteren Teil der Windschutzscheibe projiziert und damit dem Fahrer sichtbar gemacht.

Die Zuordnung von Personen und Objekten im Infrarot-Abbild zu der vor dem Fahrer liegenden, visuell durch die Windschutzscheibe erfassbaren Verkehrssituation ist vom Fahrer zu leisten. Dies ist insbesondere bei Dunkelheit, für die das bekannte System gedacht sein soll, schwierig und oft sogar unmöglich, weil das Infrarot-Abbild Personen und Objekte zeigt, die der Fahrer visuell nicht erkennen kann. Eine exaktere Positionsbestimmung der nur im Infrarot-Abbild erkennbaren Personen und Objekte ist daher regelmäßig nicht möglich und lenkt den Fahrer in gefährlicher Weise ab.

US-A-5 001 558 beschreibt ein Verfahren zur Sichtbarmachung eines Ausschnitts der Umgebung eines Fahrzeugs. Bei dem bekannten Verfahren wird ein farbiges Visuell-Abbild des Ausschnitts der Umgebung bereitgestellt, das die visuell sichtbaren Objekte im Ausschnitt der Umgebung zeigt. Ferner wird ein Infrarot-Abbild des Ausschnitts der Umgebung bereitgestellt, das die von den visuell sichtbaren Objekten ausgehende Infrarot-Strahlung zeigt. Ortsgleiche Pixel oder Pixelbereiche weitgehend zeit- und ortsgleicher Abbilder der unterschiedlichen Spektralbereiche werden durch gewichtete Mittelwertbildung von deren Pixelinformationen überlagert.

Die Aufgabe der Erfindung besteht insbesondere in der Angabe eines verbesserten Verfahrens und einer Vorrichtung zur Sichtbarmachung eines Ausschnitts der Umgebung eines Fahrzeugs, wie insbesondere ein verbessertes Nachtsichtsystem.

Die Aufgabe der Erfindung wird durch den entsprechenden, unabhängigen Anspruch verfahrensmäßig bzw. vorrichtungsmäßig gelöst. Vorteilhafte Ausgestaltungen der Erfindung sind in den zugeordneten, abhängigen Patentansprüchen angegeben.

Ein wesentlicher Aspekt der Erfindung besteht in der Anzeige bzw. Sichtbarmachung einer Kombination bzw. Überlagerung eines visuellen Abbilds, nachfolgend Visuell-Abbild genannt, und mindestens eines Infrarot-Abbilds aus mindestens einem Infrarot-Spektralbereich des weitgehend selben Ausschnitts der Umgebung eines Fahrzeugs. Durch diese Überlagerung oder Fusion der Abbilder unterschiedlicher Spektralbereiche derselben Szene, werden die vorstehend beschriebenen Nachteile des Stands der Technik weitgehend beseitigt. Erfindungsgemäß kann also vorgesehen sein, ein visuelles Abbild mit einem ersten Infrarot-Abbild eines ersten Infrarot-Spektralbereichs und mindestens einem weiteren Infrarot-Abbild eines weiteren Infrarot-Spektralbereichs zu fusionieren.

Bei einer bevorzugten Ausführungsform der Erfindung wird ein farbiges visuelles Abbild mit dem Infrarot-Abbild fusioniert bzw. kombiniert oder überlagert. Im Unterschied zu einem schwarzweißen Visuell-Abbild, entsteht bei Verwendung eines farbigen visuellen Abbildes ein fusioniertes Bild, das Farbinformationen des Visuell-Abbilds enthält, wie rote Bremsleuchten eines vorausfahrenden Fahrzeugs, eine rote Ampel, ein farbiges Verkehrsschild oder dergleichen. Die Farbinformation im fusionierten Bild erleichtert dem Fahrer eines entsprechend ausgestatteten Fahrzeugs die schnelle Orientierung und Erfassung der im fusionierten Bild dargestellten Verkehrssituation. Die Farbinformation verringert zudem die Gefahr, das farbige Warnhinweise (rote Ampel etc.) übersehen werden.

Bevorzugt werden die Abbilder der Umgebung bzw. Szene für unterschiedliche Spektralbereiche jeweils von Störeinflüssen, wie Verzerrungen des Infrarot- bzw. Visuell-Abbilds, insbesondere aufgrund von Abbildungsfehlern der jeweils verwendeten Optik usw., befreit. Dies geschieht bevorzugt softwaremäßig durch bekannte Maßnahmen zur Aufbereitung von digitalisierten Bildern. Die von Störeinflüssen weitgehend befreiten Abbilder bzw. deren digitale Bild-Daten werden bevorzugt durch digitale Bildverarbeitung zueinander ausgerichtet bzw. zur Deckung gebracht, so dass weitgehend zeit- und ortsgleiche Bild-Paare aus Infrarot- und Visuell-Abbild bzw. von deren digitalen Daten vorliegen. Dies geschieht bevorzugt unter Verwendung von Software und Hardware zur digitalen Bildverarbeitung, die eine Verschiebung, Drehung und Skalierung der Abbilder relativ zueinander ermöglicht. Durch diese Aufbereitung kann der nachfolgende Hardwareaufwand zur Überlagerung bzw. Fusion der Abbilder aus den unterschiedlichen Spektralbereichen in kostengünstiger Weise - trotz weitgehender Echtzeit-Verarbeitung zeit- und ortsgleicher Bild-Paare - minimiert werden.

Gemäß einer bevorzugten Ausführungsform der Erfindung, werden die Infrarot-Abbilder und die Visuell-Abbilder mit jeweils gleicher Bildwiederholrate, bevorzugt von ein oder zwei Kameras oder Sensoren für diese Spektralbereiche, erzeugt. Hierdurch können in besonders einfacher Weise zeitgleiche Bild-Paare aus Infrarot-Abbild und Visuell-Abbild erzeugt werden, was den Software- und HardwareAufwand für die nachfolgende, erfindungsgemäße Überlagerung bzw. Fusion beider Abbilder - weitgehend in Echtzeit - erheblich vermindert. Die Verarbeitungsgeschwindigkeit der Bild-Paare steigt; die Kosten für Halbleiter-Speicher zur Zwischenspeicherung der Abbilder werden minimiert.

Bei einer bevorzugten Ausführungsform der Erfindung, zeigt das Infrarot-Abbild die von Personen und Objekten abgegebene Infrarot-Strahlung bzw. Wärmestrahlung, die im Wellenlängenbereich von ca. 8 bis 14 µm liegt. Bevorzugt wird eine IR-Kamera oder ein IR-Sensor verwendet, die oder der im Bereich von ca. 8 bis 10 µm empfindlich ist. Damit kann in vorteilhafter Weise auf einen Infrarot-Strahler bzw. eine solche Beleuchtung (typischer Wellenlängenbereich von ca. 800 nm bis 2,5 µm) für die Fahrzeugumgebung verzichtet werden. Eine wechselseitige Blendung entgegenkommender Fahrzeuge, die in bekannter Weise jeweils mit einer Infrarot-Beleuchtung versehen sind, tritt nicht auf. Ebenso ist das erfindungsgemäße Infrarot-Abbild nicht auf die Reichweite einer Infrarot-Beleuchtung beschränkt.

Die Erfindung wird nachfolgend anhand eines Ausführungsbeispiels näher erläutert. Es zeigt:

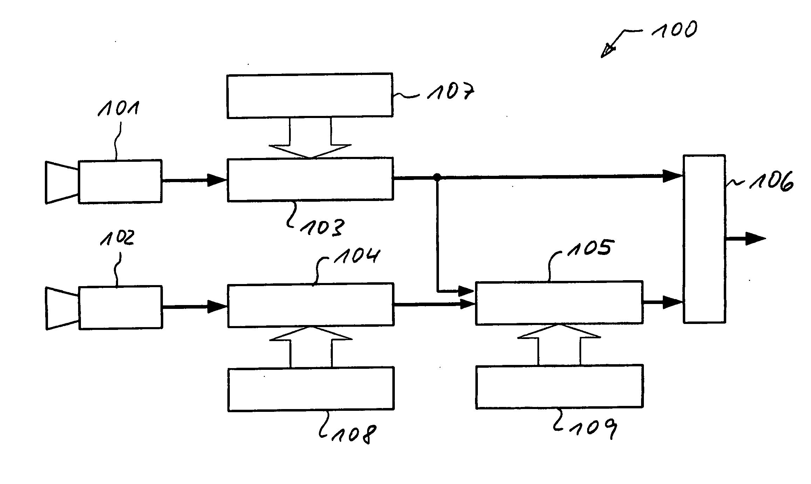

Fig. 1 das Blockschaltbild einer erfindungsgemäßen Vorrichtung zur Sichtbarmachung eines Ausschnitts der Umgebung eines Fahrzeugs bzw. ein Nachtsichtsystem, anhand dem das erfindungsgemäße Verfahren zur Sichtbarmachung beschrieben wird.

Die in Fig. 1 als Blockschaltbild dargestellte, erfindungsgemäße Vorrichtung bzw. das Nachtsichtsystem 100 weist eine im visuellen Spektralbereich aufnehmende elektronische, hier sogenannte Visuell-Kamera 101, z. B. ein CCD-Sensor, eine im infraroten Spektralbereich von ca. 8 bis 10 µm empfindliche elektronische Infrarot-Kamera 102, z. B. ein IR-Sensor, eine erste Normalisierungsvorrichtung 103, eine zweite Normalisierungsvorrichtung 104 eine Ausricht-Vorrichtung 105 und eine Überlagerungs- bzw. Fusionseinrichtung 106 auf. Die Visuell-Kamera 101 liefert ein farbiges, visuelles Abbild.

Die optischen Achsen der Kameras 101 und 102 sind bevorzugt parallel zueinander ausgerichtet, wodurch der Parallaxenfehler minimiert werden kann, und liegen bevorzugt nahe beieinander, wodurch Versetzungsfehler minimiert werden. Die Bildebenen beider Kameras oder Sensoren werden bevorzugt parallel zueinander und senkrecht zur optischen Achse ausgerichtet und liegen nahe beieinander. Die fotoempfindlichen Sensorflächen beider Kameras bzw. Sensoren sind bevorzugt relativ zueinander weder verdreht noch gekippt, sondern weitgehend parallel zueinander angeordnet. Beide Kameras oder Sensoren haben bevorzugt zudem denselben Öffnungswinkel. Durch diese Maßnahmen kann erreicht werden, das die Kameras oder Sensoren Abbilder unterschiedlicher Spektralbereiche liefern, die weitgehend denselben Ausschnitt der Umgebung zeigen und relativ zueinander und zur tatsächlichen Situation nicht verdreht sind. Hierdurch kann der Aufwand für eine Bearbeitung der Abbilder zur Bereitstellung eines fusionierten Bilds aus beiden Abbildern und damit der Hardware- und Software-Aufwand deutlich verringert werden.

Die optischen Oberflächen der Kameras werden bevorzugt hydrophob beschichtet und bevorzugt ist zu ihrer Reinigung eine zur Scheinwerferreinigung übliche Hochdruckdüse oder dgl. vorgesehen. Beide Kameras werden bevorzugt in einem gemeinsamen Gehäuse eingebaut (Montagefreundlichkeit, Gesamtausrichtung zur Fahrzeugachse, keine Verschiebung optischer Parameter der Kameras untereinander). Am Gehäuse der Kameras sind bevorzugt Befestigungen angeordnet, die einen vibrationsarmen Betrieb der Kameras am oder im Fahrzeug gewährleisten. Für den Betrieb der Kamera sind Anschlüsse für die Betriebsspannung vorgesehen. Die Betriebsspannung der Kameras sollte flexibel an die jeweilige Bordnetzspannung, wie z. B. 12 Volt und/oder 48 Volt, anpassbar sein. Um die Elektronik und die Sensoren der Kameras bzw. Sensoren vor Beschädigungen zu schützen, ist im Betriebsspannungszweig bevorzugt eine Überlastsicherung und ein Verpolungsschutz eingebracht. Die Ausgabe der von den Kameras oder Sensoren generierten Videosignale (Spektralbereiche getrennt oder bereits fusioniert) sollte sich an einem Standard orientieren (z. B. NTSC, PAL, SECAM oder eigener Standard). Als Digital/Analogumsetzer können vorhandene Halbleiterelemente verwendet werden. Die Kameras oder Sensoren können zur Sichtbarmachung der Fahrumgebung vor, hinter und seitlich vom Fahrzeug angebracht werden.

Im Folgenden wird die Kalibrierung des Nachsichtsystems bzw. der Vorrichtung 100 näher beschrieben. Zur Kalibrierung wird eine erfindungsgemäße Kalibriervorrichtung (nicht dargestellt) verwendet. Diese weist mehrere Glühlampen auf, die bevorzugt schachbrettartig angeordnet sind. Glühlampen zeichnen sich dadurch aus, dass sie sowohl Wärmestrahlung als auch visuell sichtbare Strahlung abgeben. Bevorzugt wird eine mit mehreren Glühlampen versehene Platte oder dgl. in einem empirisch ermittelten, bevorzugten Abstand vor den beiden Kameras bzw. Sensoren 101 und 102 angeordnet. Der Begriff "bevorzugter Abstand" wird nachfolgend näher erläutert.

Die vor den Kameras 101 und 102 befindliche Kalibriervorrichtung, die bevorzugt in dunkler Umgebung und nicht in der Nachbarschaft von Wärmequellen angeordnet ist, erzeugt in der Visuell-Kamera 101 ein (sogenanntes) Visuell-Abbild, das die schachbrettartig angeordneten Glühlampen zeigt, wie sie auch das menschliche Auge sieht. Ferner erzeugt die Kalibriervorrichtung in der Infrarot-Kamera 102 ein Wärmebild, das ebenfalls die Anordnung der Glühlampen zeigt. Typischerweise zeigt sowohl das Visuell-Abbild als auch das Infrarot-Abbild, insbesondere aufgrund von optischen Abbildungsfehlern etc., Verzeichnungen an den Rändern des jeweiligen Abbilds. In bekannter Weise werden die Verzeichnungen bzw. Abbildungsfehler im Visuell-Abbild durch eine erste Normalisierungsvorrichtung 103 weitgehend beseitigt. In bekannter Weise werden die Verzeichnungen bzw. Abbildungsfehler im Infrarot-Abbild durch eine zweite Normalisierungsvorrichtung 104 weitgehend beseitigt. Die Normalisierung bzw. Fehlerbeseitigung erfolgt bevorzugt durch bekannte, softwaremäßige Maßnahmen an den digitalen Daten der Abbilder (digitale Bildverarbeitung) unter Verwendung von Kalibrierungsparametern 107 für das Visuell-Abbild und Kalibrierungsparametem 108 für das Infrarot-Abbild.

Die normalisierten bzw. weitgehend von Störungen etc. befreiten Abbilder bzw. deren digitalen Daten werden durch einen an sich in der digitalen Bildverarbeitung bekannten Registrierungsvorgang zueinander durch eine Ausricht-Vorrichtung 105 unter Verwendung von Registrierungsparametem 109 ausgerichtet. Bei dem Ausrichtvorgang bleibt bevorzugt eines der Abbilder unverändert und dient als Referenz für das andere Abbild. Das zweite Abbild wird in Größe und Lage so verändert, dass ein weitgehend objektgleiches Abbild relativ zum ersten Abbild entsteht.

Die normalisierten Abbilder werden also relativ zueinander ausgerichtet, dass die von ein und dem selben Objekt emittierte Strahlung später im fusionierten Bild beider Abbilder nahezu deckungsgleich ist. Wird dieser Vorverarbeitungsschritt nicht ausgeführt, entstehen aufgrund unterschiedlicher Kamerageometrien und des Kameraversatzes Schatten- oder Zwillingsbilder. Das bedeutet, dass ein Objekt an zwei Orten und in unterschiedlichen Größen im fusionierten Bild erscheint. Der Betrachter wird von solch einem Bild eher irritiert, als dass ihm geholfen wird.

Die Ausrichtung kann in drei Schritte eingeteilt werden: Verschiebung, Drehung und Skalierung. In der Praxis stellte sich heraus, das die Reihenfolge Drehung, Skalierung und Verschiebung die qualitativ besten Resultate lieferte. Da die Reihenfolge dieser Schritte im Allgemeinen nicht kommutativ bzw. vertauschbar ist, sollte darauf geachtet werden, dass die Reihenfolge dieser Schritte bei der Kalibrierung und bei dem nachfolgenden Betrieb des erfindungsgemäßen Nachtsichtsystems dieselbe ist. Ggf. ist die Kalibrier- und/oder Betriebs-Software des Nachtsichtsystems entsprechend zu gestalten.

Die zueinander ausgerichteten Abbilder werden in einer Überlagerungs- bzw. Fusionseinrichtung 106 softwaremäßig durch die Bearbeitung von deren digitalen Daten überlagert bzw. fusioniert. Aus jedem zeit- und ortsgleichen bzw. objektgleichen Bild-Paar aus Visuell-Abbild und Infrarot-Abbild wird ein fusioniertes oder überlagertes Bild generiert, das dem Fahrer des Fahrzeugs bevorzugt auf einem Farb-Monitor im Fahrzeug dargestellt wird. Bei der Kalibrierung wird der Abstand der Kalibriervorrichtung von den beiden Kameras so gewählt, das keine Schattenbilder bei Personen und Objekten entstehen, die sich bspw. in einem Abstandsbereich von 10 bis 300 m vor den Kameras bzw. vor dem Fahrzeug befinden.

Bevorzugt erfolgt eine Fusion der zeit- und ortsgleichen Bildpaare aus Visuell-Abbild und Infrarot-Abbild auf der Basis einzelner, einander zugeordneter Pixel-Paare aus beiden Abbildern oder unter Verwendung von mehreren Pixeln aus den beiden Abbildem. Dies kann sich insbesondere daran orientieren, welche Auflösung gewünscht und/oder welche Rechenleistung für die digitale Bildverarbeitung zur Verfügung steht. Die wie beschrieben vorverarbeiteten Abbilder werden durch digitale Verarbeitung von deren Bild-Daten überlagert und angezeigt. Vom Ergebnis her, kann dieser Vorgang annähernd mit dem Übereinanderlegen von Folien oder Dias derselben Szene oder Fahrumgebung verglichen werden. Rechentechnisch bzw. bei der digitalen Bildverarbeitung wird dies durch gewichtete Mittelwertbildung der Pixelinformationen, wie insbesondere unter Berücksichtigung von deren Helligkeit in den jeweiligen Abbildern und der im Visuell-Abbild und/oder im Infrarot-Abbild enthaltenen Farbinformation, erreicht. Dies muss nicht notwendigerweise Pixel für Pixel erfolgen, sondern kann auch durch Mittelwertbildung für orts- und zeitgleiche Pixelbereiche in beiden Abbildern geschehen

Ferner kann es sinnvoll sein, die Pixelinformation im Infrarot-Abbild bei der Mittelwertbildung unterschiedlich zur zeit- und ortsgleichen Pixelinformation im Visuell-Abbild zu gewichten. Diese unterschiedliche Gewichtung kann bspw. tageslicht- und/oder witterungsabhängig und/oder in Abhängigkeit vom Scheinwerferlicht des Kraftfahrzeugs und/oder in Abhängigkeit von der Farbe im Visuell-Abbild erfolgen; hierdurch kann bspw. erreicht werden, dass eine rote Ampel im Fusionsbild besonders deutlich erkennbar ist. Die unterschiedliche Gewichtung muss nicht notwendigerweise Pixel für Pixel erfolgen, sondern kann auch für orts- und zeitgleiche Pixelbereiche in beiden Abbildern geschehen.

Durch dieses Vorgehen können einzelne Bildbereiche besonders hervorgehoben werden. So kann beispielsweise der unmittelbare Fahrbereich des Fahrzeugs stärker betont werden, um eine gewisse Führung des Fahrers zu erreichen.

Bei zunehmender Dunkelheit könnte die Gewichtung der Infrarot-Information ggü. der visuellen Information bei der Mittelwertbildung zunehmen. Bei eingeschaltetem Abblendlicht könnte die Gewichtung der Infrarot-Information ggü. der visuellen Information im Vergleich zu eingeschaltetem Fernlicht erhöht werden.

Ebenso könnte der Informationsgehalt eines Bereichs in dem jeweiligen Abbild die Gewichtung mitbestimmen. Ist der Informationsgehalt, der insbesondere durch die in der Informationstheorie definierte Entropie bestimmt werden kann, in einem zeit- und ortsgleichen Bereich des Visuell-Abbilds bspw. deutlich höher als in demselben Bereich des Infrarot-Bereichs, so kann es sinnvoll sein, dies bei der Mittelwertbildung durch eine höhere Gewichtung der Visuell-Information zu berücksichtigen.

Wie bereits beschrieben, müssen die von den Kameras bzw. Sensoren generierten Abbilder vorverarbeitet werden, um entzerrt und objekttreu ausgerichtet zu sein. Um Speicher, der kostenintensiv ist, einzusparen, greift der Software-Algorithmus bevorzugt pixelweise auf die Sensorinformationen der Kameras 101 und 102 zu.

Bei den in Figur 1 dargestellten Vorrichtungen zur digitalen Bildverarbeitung, handelt es sich ganz oder teilweise bevorzugt um ein oder mehrere softwaregesteuerte Digital-Prozessoren, die vorzugsweise zur digitalen Bildverarbeitung in Echtzeit optimiert worden sind. Ebenso ist es aber auch denkbar, einen oder mehrere softwaregesteuerte PC-Prozessoren in kostengünstiger Weise zu verwenden, wenn deren Verarbeitungsgeschwindigkeit eine weitgehende Echtzeitverarbeitung der Abbilder zur Bereitstellung eines Fusions-Bildes mit Visuell- und Infrarot-Informationen gestattet.

## Patentansprüche

1. Verfahren zur Sichtbarmachung eines Ausschnitts der Umgebung eines Fahrzeugs, insbesondere bei Dunkelheit, bei dem
ein Visuell-Abbild des Ausschnitts der Umgebung bereitgestellt wird, bevorzugt ein farbiges Visuell-Abbild, und das visuelle Abbild die visuell sichtbaren Objekte im Ausschnitt der Umgebung zeigt,
ein Infrarot-Abbild des Ausschnitts der Umgebung bereitgestellt wird und das Infrarot-Abbild die von den visuell sichtbaren und/oder weiteren Objekten ausgehende Infrarot-Strahlung zeigt,
ortsgleiche Pixel oder Pixelbereiche weitgehend zeit- und ortsgleicher Abbilder der unterschiedlichen Spektralbereiche durch gewichtete Mittelwertbildung von deren Pixelinformationen überlagert werden,
**dadurch gekennzeichnet, dass**
die Visuell-Information eines Pixelbereichs bei der Mittelwertbildung ggü. der Infrarot-Information des Pixelbereichs höher gewichtet wird, wenn der Informationsgehalt von dessen Visuell-Information höher als der Informationsgehalt von dessen Infrarot-Information ist, wobei der Informationsgehalt insbesondere durch die in der Informationstheorie definierte Entropie bestimmt wird.

2. Verfahren nach Anspruch 1, **dadurch gekennzeichnet, dass** die von den visuell sichtbaren Objekten und/oder den weiteren Objekten ausgehende und erfasste Infrarot-Strahlung eine Wellenlänge im Bereich von ca. 7 bis 14 µm, bevorzugt ca. 7,5 -10,5 µm, aufweist.

3. Verfahren nach Anspruch 1 oder 2, **dadurch gekennzeichnet, dass** die von den visuell sichtbaren Objekten und/oder den weiteren Objekten ausgehende und erfasste Infrarot-Strahlung eine Wellenlänge im Bereich von ca. 3 µm bis ca. 5 µm, aufweist.

4. Verfahren nach einem der Ansprüche 1 bis 3, **dadurch gekennzeichnet, dass** die von den visuell sichtbaren Objekten und/oder den weiteren Objekten ausgehende und erfasste Infrarot-Strahlung eine Wellenlänge im Bereich von ca. 800 nm bis ca. 2,5 µm, aufweist.

5. Verfahren nach einem der Ansprüche 1 bis 4, **dadurch gekennzeichnet, dass** Fehler in dem in Form von digitalen Daten vorliegenden Visuell-Abbild des Ausschnitts der Umgebung unter Verwendung einer Kalibriervorrichtung beseitigt werden.

6. Verfahren nach Anspruch 5, **dadurch gekennzeichnet, dass** Fehler in dem in Form von digitalen Daten vorliegenden Infrarot-Abbild des Ausschnitts der Umgebung unter Verwendung der Kalibriervorrichtung beseitigt werden.

7. Verfahren nach einem der Ansprüche 5 oder 6, **dadurch gekennzeichnet, dass** von der Kalibriervorrichtung visuell sichtbare Strahlung und Infrarot-Strahlung ausgesandt wird.

8. Verfahren nach Anspruch 7, **dadurch gekennzeichnet, dass** die Kalibriervorrichtung mindestens eine Glühlampe aufweist, die im Fall von mehreren Glühlampen vorzugsweise schachbrettartig angeordnet sind

9. Verfahren nach einem der vorstehenden Ansprüche, **dadurch gekennzeichnet, dass** das Visuell-Abbild des Ausschnitts der Umgebung oder das von Fehlern befreite Visuell-Abbild ggü. dem Infrarot-Abbild oder dem von Fehlem befreiten Infrarot-Abbild oder umgekehrt durch die Verarbeitung von digitalen Daten der Abbilder ausgerichtet wird, so dass weitgehend zeitgleiche und ortsgleiche Bild-Paare beider Spektralbereiche bereitgestellt werden

10. Verfahren nach einem der vorstehenden Ansprüche, **dadurch gekennzeichnet, dass** das Visuell-Abbild bzw. dessen digitale Daten durch eine im visuellen Spektralbereich empfindliche Visuell-Kamera (101), bevorzugt eine farbempfindliche Visuell-Kamera, oder einen solchen ersten Sensor und das Infrarot-Abbild bzw. dessen digitale Daten durch eine im infraroten Spektralbereich empfindliche Infrarot-Kamera (102) oder einen solchen zweiten Sensor bereitgestellt wird.

11. Verfahren nach Anspruch 10, **dadurch gekennzeichnet, dass** die digitalen Daten des Visuell-Abbilds und/oder des Infrarot-Abbilds in einem Bilddatenspeicher temporär gespeichert werden.

12. Verfahren nach einem der vorstehenden Ansprüche, **dadurch gekennzeichnet, dass** die Bildwiederholrate der Visuell-Kamera oder des ersten Sensors und der Infrarot-Kamera oder des zweiten Sensors zumindest weitgehend identisch sind.

13. Verfahren nach einem der vorstehenden Ansprüche, **dadurch gekennzeichnet, dass** ortsgleiche Pixel oder Pixelbereiche der weitgehend zeit- und ortsgleichen Abbilder der unterschiedlichen Spektralbereiche durch Verarbeitung von deren digitalen Daten einander überlagert werden bzw. dass eine Mittelwertbildung vorgenommen wird.

14. Verfahren nach einem der vorstehenden Ansprüche, **dadurch gekennzeichnet, dass** die Helligkeitswerte und/oder Farbwerte der Pixel oder Pixelbereiche überlagert bzw. für eine Mittelwertbildung herangezogen werden

15. Verfahren nach einem der nach einem der vorstehenden Ansprüche, **dadurch gekennzeichnet, dass** eine gewichtete Überlagerung bzw. Mittelwertbildung für ein oder mehrere weitgehend ortsgleiche Pixel aus dem Visuell-Abbild und dem Infrarot-Abbild vorgenommen wird.

16. Verfahren nach einem der vorstehenden Ansprüche, **dadurch gekennzeichnet, dass** die Gewichtung unter Berücksichtigung der Helligkeit und/oder der Sichtbedingungen in der Umgebung des Fahrzeugs erfolgt

17. Verfahren nach Anspruch 15 oder 16, **dadurch gekennzeichnet, dass** Infrarot-Pixel und Visuell-Pixel oder solche Pixel-Bereiche unterschiedlich gewichtet werden.

18. Verfahren nach einem der vorstehenden Ansprüche, **dadurch gekennzeichnet, dass** informationsreiche Gebiete ggü. informationsarmen Gebieten des Visuell-Abbilds und/oder des Infrarot-Abbilds bei der Überlagerung bzw. Mittelwertbildung höher gewichtet werden.

19. Vorrichtung (100) zur Sichtbarmachung eines Ausschnitts der Umgebung eines Fahrzeugs, insbesondere bei Dunkelheit, umfassend Mittel (101) zur Bereitstellung eines
Visuell-Abbilds des Ausschnitts der Umgebung, bevorzugt einer farbigen Visuell-Abbilds, das die visuell sichtbaren Objekte im Ausschnitt der Umgebung zeigt,
Mittel (102) zur Bereitstellung eines Infrarot-Abbilds des Ausschnitts der Umgebung, das die von den visuell sichtbaren und/oder weiteren Objekten ausgehende Infrarot-Strahlung zeigt,
Mittel (106) zur Überlagerung ortsgleicher Pixel oder Pixelbereiche weitgehend zeit- und ortsgleicher Abbilder der unterschiedlichen Spektralbereiche durch gewichtete Mittelwertbildung von deren Pixelinformationen,
**dadurch gekennzeichnet, dass** die Mittel zur Überlagerung
die Visuell-Information eines Pixelbereichs bei der Mittelwertbildung ggü. der Infrarot-Information des Pixelbereichs höher gewichten, wenn der Informationsgehalt von dessen Visuell-Information höher als der Informationsgehalt von dessen Infrarot-Information ist, wobei der Informationsgehalt insbesondere durch die in der Informationstheorie definierte Entropie bestimmt wird.

20. Vorrichtung nach Anspruch 19, **gekennzeichnet dadurch, dass** die Mittel zur Bereitstellung eines visuell- Abbilds eine Visuell-Kamera (101), bevorzugt eine farbempfindliche Visuell-Kamera umfassen, die Mittel zur Bereitstellung eines Infrarot-Abbilds eine Infrarot-Kamera (102) umfassen, die Vorrichtung weiter eine erste Normalisierungsvorichtung (103) zur Beseitigung von Fehlern in dem von der Visuell-Kamera bereitgestellten, vorzugsweise farbigen visuellen Abbild des Ausschnitts der Umgebung des Fahrzeugs, eine zweite Normalisierungsvorrichtung (104) zur Beseitigung von Fehlern in dem von der Infrarot-Kamera (102) bereitgestellten Infrarot-Abbild des Ausschnitts der Umgebung des Fahrzeugs, eine Ausricht-Vorrichtung (105) zur Erzeugung von weitgehend zeit- und ortsgleichen Bildpaaren aus Visuell-Abbildern und Infrarot-Abbildern umfassst, und dass die Mittel zur Überlagerung eine Fusions- bzw. Überlagerungseinrichtung (106) umfassen, die die weitgehend zeit- und ortsgleichen Bildpaare pixelweise oder bereichsweise überlagert und/oder Mittelwerte bildet.

## Claims

1. A method for rendering a section of the environment of a vehicle visible, more especially in the dark, wherein a visual image, preferably a colour visual image, of the section of the environment is provided, and the visual image shows the visually visible objects in the section of the environment, an infrared image of the section of the environment is provided, and the infrared image shows the infrared radiation emanating from the visually visible and/or further objects, and location-identical pixels or pixel regions of substantially time and location-identical images of the different spectral ranges are superimposed by means of weighted averaging of the pixel information thereof, **characterised in that** the visual information of a pixel region is weighted more highly, in the averaging process, than the infrared information of the pixel region if the information content of its visual information is greater than the information content of its infrared information, the information content being determined, more especially, by the entropy defined in information theory.

2. A method according to claim 1, **characterised in that** the detected infrared radiation emanating from the visually visible objects and/or the further objects has a wavelength in the range from approximately 7 to 14 µm, preferably approximately 7.5 to 10.5 µm.

3. A method according to either claim 1 or 2, **characterised in that** the detected infrared radiation emanating from the visually visible objects and/or the further objects has a wavelength in the range from approximately 3 µm to approximately 5 µm.

4. A method according to any one of claims 1 to 3, **characterised in that** the detected infrared radiation emanating from the visually visible objects and/or the further objects has a wavelength in the range from approximately 800 nm to approximately 2.5 µm.

5. A method according to any one of claims 1 to 4, **characterised in that** errors in the visual image, which is in the form of digital data, of the section of the environment are eliminated using a calibration device.

6. A method according to claim 5, **characterised in that** errors in the infrared image, which is in the form of digital data, of the section of the environment are eliminated using a calibration device.

7. A method according to either claim 5 or claim 6, **characterised in that** visually visible radiation and infrared radiation are emitted by the calibration device.

8. A method according to claim 7, **characterised in that** the calibration device comprises at least one incandescent lamp, which, in the case of a plurality of incandescent lamps, are preferably arranged in the manner of a chessboard.

9. A method according to any one of the preceding claims, **characterised in that** the visual image of the section of the environment or the visual image from which errors are eliminated is oriented with respect to the infrared image or the infrared image from which errors are eliminated, or vice versa, by the processing of digital data of the images, so predominantly time-identical and location-identical image pairs of both spectral ranges are provided.

10. A method according to any one of the preceding claims, **characterised in that** the visual image or the digital data thereof is provided by a visual camera (101), preferably a colour-sensitive visual camera, which is sensitive in the visual spectral range, or a first sensor of this type, and the infrared image or the digital data thereof is provided by an infrared camera (102), which is sensitive in the infrared spectral range, or a second sensor of this type.

11. A method according to claim 10, **characterised in that** the digital data of the visual image and/or of the infrared image is temporarily stored in an image data memory.

12. A method according to any one of the preceding claims, **characterised in that** the refresh rate of the visual camera or the first sensor and that of the infrared camera or the second sensor are at least substantially identical.

13. A method according to any one of the preceding claims, **characterised in that** location-identical pixels or pixel regions of the substantially time and location-identical images of the different spectral ranges are superimposed on one another by processing the digital data thereof, or **in that** an averaging process is carried out.

14. A method according to any one of the preceding claims, **characterised in that** the brightness values and/or colour values of the pixels or pixel regions are superimposed or used for an averaging process.

15. A method according to any one of the preceding claims, **characterised in that** a weighted superimposition or averaging process is carried out for one or more substantially location-identical pixels from the visual image and the infrared image.

16. A method according to any one of the preceding claims, **characterised in that** the weighting process takes place taking into account the brightness and/or the visibility conditions in the environment of the vehicle.

17. A method according to either claim 15 or claim 16, **characterised in that** infrared pixels and visual pixels or pixel regions of these types are differently weighted.

18. A method according to any one of the preceding claims, **characterised in that** areas having a high information content are weighted more highly, in the superimposition or averaging process, than areas having a low information content of the visual image and/or of the infrared image.

19. A device (100) for rendering a section of the environment of a vehicle visible, more especially in the dark, comprising means (101) for providing a visual image, preferably a colour visual image, of the section of the environment, which image shows the visually visible objects in the section of the environment, means (102) for providing an infrared image of the section of the environment, which image shows the infrared radiation emanating from the visually visible and/or further objects, and means (106) for superimposing location-identical pixels or pixel regions of substantially time and location-identical images of the different spectral ranges by means of weighted averaging of the pixel information thereof, **characterised in that** the means for superimposing weight the visual information of a pixel region more highly, in the averaging process, than the infrared information of the pixel region if the information content of its visual information is greater than the information content of its infrared information, the information content being determined, more especially, by the entropy defined in information theory.

20. A device according to claim 19, **characterised in that** the means for providing a visual image comprise a visual camera (101), preferably a colour-sensitive visual camera, the means for providing an infrared image comprise an infrared camera (102), the device further comprises a first standardisation device (103) for eliminating errors in the preferably colour visual image, provided by the visual camera, of the section of the environment of the vehicle, a second standardisation device (104) for eliminating errors in the infrared image, provided by the infrared camera (102), of the section of the environment of the vehicle, an orientation device (105) for producing substantially time and location-identical image pairs consisting of visual images and infrared images, and **in that** the superimposition means comprise a merging or superimposition device (106), which superimposes, by pixels or by regions, the substantially time and location-identical image pairs and/or forms averages.

## Revendications

1. Procédé de visualisation d'une partie de l'environnement d'un véhicule, en particulier dans l'obscurité, selon lequel
on met à disposition une représentation visuelle de la partie de l'environnement, de préférence en couleurs,
on met à disposition une représentation infrarouge de la partie de l'environnement qui montre le rayonnement infrarouge des objets perceptibles visuellement et/ou d'autres objets,
on superpose des pixels ou des zones de pixels du même lieu se rapportant à des représentations en grande partie du même moment et du même lieu des différentes zones spectrales en formant une valeur moyenne pondérée des informations contenues dans les pixels,
**caractérisé en ce que**
dans le cas où la valeur moyenne est formée par rapport à l'information infrarouge d'une zone de pixels, l'information visuelle de la zone de pixels est pondérée de manière plus importante si son contenu est plus important que le contenu de son information infrarouge, le contenu des informations étant déterminé en particulier par l'entropie définie dans la théorie des informations.

2. Procédé selon la revendication 1,
**caractérisé en ce que**
le rayonnement infrarouge détecté provenant des objets perceptibles visuellement et/ou des autres objets présente une longueur d'ondes comprise dans la plage de 7 à 14 µm environ, de préférence de 7,5 à 10,5 µm environ.

3. Procédé selon la revendication 1 ou 2,
**caractérisé en ce que**
le rayonnement infrarouge détecté provenant des objets perceptibles visuellement et/ou d'autres objets présente une longueur d'ondes comprise dans la plage de 3 µm à 5 µm environ.

4. Procédé selon l'une des revendications 1 à 3,
**caractérisé en ce que**
le rayonnement infrarouge détecté provenant des objets perceptibles visuellement et/ou d'autres objets présente une longueur d'ondes comprise dans la plage de 800 nm à 2,5 µm environ.

5. Procédé selon l'une des revendications 1 à 4,
**caractérisé en ce qu'**
on supprime des erreurs générées dans la représentation visuelle de la partie de l'environnement, présentée sous forme de données numériques, en utilisant un dispositif d'étalonnage.

6. Procédé selon la revendication 5,
**caractérisé en ce qu'**
on supprime des erreurs générées dans la représentation infrarouge de la partie de l'environnement, présentée sous forme de données numériques, en utilisant un dispositif d'étalonnage.

7. Procédé selon l'une des revendications 5 ou 6,
**caractérisé en ce que**
le dispositif d'étalonnage émet un rayonnement perceptible visuellement et un rayonnement infrarouge.

8. Procédé selon la revendication 7,
**caractérisé en ce que**
le dispositif d'étalonnage présente au moins une lampe à incandescence et, dans le cas de plusieurs lampes, elles sont de préférence disposées en quinconce.

9. Procédé selon l'une des revendications précédentes,
**caractérisé en ce que**
la représentation visuelle de la partie de l'environnement ou la représentation visuelle exempte d'erreurs est transmise, par rapport à la représentation infrarouge ou la représentation infrarouge exempte d'erreurs ou inversement, en traitant les données numériques des représentations de manière à pouvoir mettre à disposition des paires d'image des deux zones spectrales en grande partie du même moment et du même lieu

10. Procédé selon l'une des revendications précédentes,
**caractérisé en ce que**
la représentation visuelle ou ses données numériques est(sont) mise(s) à disposition par une caméra visuelle (101) sensible dans le domaine spectral visible, de préférence une caméra visuelle panchromatique, ou un premier capteur de ce type et la représentation infrarouge ou ses données numériques est(sont) mise(s) à disposition par une caméra infrarouge (102) sensible dans le domaine spectral infrarouge ou un deuxième capteur de ce type.

11. Procédé selon la revendication 10,
**caractérisé en ce que**
les données numériques de la représentation visuelle et/ou de la représentation infrarouge sont mémorisées temporairement dans une mémoire de données d'images.

12. Procédé selon l'une des revendications précédentes,
**caractérisé en ce que**
la vitesse de retransmission des images de la caméra visuelle ou du premier capteur et de la caméra infrarouge ou du deuxième capteur sont au moins en grande partie identiques.

13. Procédé selon l'une des revendications précédentes,
**caractérisé en ce que**
des pixels ou zones de pixel du même lieu se rapportant aux représentations en grande partie du même moment et du même lieu des différents domaines spectraux sont superposé(e)s entre eux(elles) en traitant leurs données numériques ou en formant une valeur moyenne.

14. Procédé selon l'une des revendications précédentes,
**caractérisé en ce que**
les valeurs de luminosité et/ou de couleurs des pixels ou des zones de pixel sont superposées ou extraites pour former une valeur moyenne.

15. Procédé selon l'une des revendications précédentes,
**caractérisé en ce qu'**
une superposition pondérée ou une formation de valeur moyenne est effectuée pour un ou plusieurs pixel(s) en grande partie du même lieu à partir de la représentation visuelle et de la représentation infrarouge.

16. Procédé selon l'une des revendications précédentes,
**caractérisé en ce que**
la pondération s'effectue en prenant en compte la luminosité et/ou les conditions de visibilité dans l'environnement du véhicule.

17. Procédé selon la revendication 15 ou 16,
**caractérisé en ce que**
des pixels infrarouges et des pixels visuels ou de telles zones de pixels sont pondérés différemment.

18. Procédé selon l'une des revendications précédentes,
**caractérisé en ce que**
des domaines riches en informations ou des domaines pauvres en informations dans la représentation visuelle et/ou la représentation infrarouge sont pondérés de manière plus importante lors de la superposition ou de la formation de la valeur moyenne.

19. Dispositif (100) de visualisation d'une partie de l'environnement d'un véhicule, en particulier dans l'obscurité, comprenant des moyens (101) pour mettre à disposition une représentation visuelle de la partie de l'environnement, de préférence une représentation visuelle en couleurs qui montre les objets perceptibles visuellement dans la partie de l'environnement, des moyens (102) pour mettre à disposition une représentation infrarouge de la partie de l'environnement qui montre le rayonnement infrarouge provenant des objets perceptibles visuellement et/ou d'autres objets, des moyens (106) pour superposer des pixels ou des zones de pixel du même lieu se rapportant à des représentations en grande partie du même moment et du même lieu des différentes zones spectrales en formant une valeur moyenne pondérée de leurs informations contenues dans les pixels,
**caractérisé en ce que**
dans le cas où la valeur moyenne est formée par rapport à l'information infrarouge d'une zone de pixels, les moyens de superposition de l'information visuelle d'une zone de pixels sont pondérés de manière plus importante si le contenu de son information visuelle est plus important que le contenu de son information infrarouge, le contenu des informations étant déterminé en particulier par l'entropie définie dans la théorie des informations.

20. Dispositif selon la revendication 19,
**caractérisé en ce que**
les moyens de mise à disposition d'une représentation visuelle comprennent une caméra visuelle (101), de préférence une caméra visuelle panchromatique, les moyens de mise à disposition d'une représentation infrarouge comprennent une caméra infrarouge (102), le dispositif comprenant en outre un premier dispositif de normalisation (103) pour supprimer des erreurs dans la représentation visuelle, de préférence en couleurs, de la partie de l'environnement du véhicule mise à disposition par la caméra visuelle, un deuxième dispositif de normalisation (104) pour supprimer des erreurs dans la représentation infrarouge de la partie de l'environnement du véhicule mise à disposition par la caméra infrarouge (102), un dispositif de transmission (105) pour générer des paires d'images en grande partie du même moment et du même lieu à partir de représentations visuelles et de représentations infrarouges, et les moyens de superposition comprennent un dispositif de fusion ou de superposition (106) qui superposent par pixels ou par zone les paires d'images en grande partie du même moment et du même lieu et/ou qui forme des valeurs moyennes.
